(19) Europäisches Patentamt
European Patent Office
Office européen des brevets

(11) **EP 4 178 842 B1**

(12) **FASCICULE DE BREVET EUROPEEN**

(45) Date de publication et mention
de la délivrance du brevet:
**24.04.2024 Bulletin 2024/17**

(21) Numéro de dépôt: **21737089.9**

(22) Date de dépôt: **29.06.2021**

(51) Classification Internationale des Brevets (IPC):
**B60W 30/095** *(2012.01)* **B60W 30/12** *(2020.01)*
**B60W 60/00** *(2020.01)* **B60W 50/00** *(2006.01)*
**B60W 50/08** *(2020.01)*

(52) Classification Coopérative des Brevets (CPC):
**B60W 30/12; B60W 30/095; B60W 50/0097;**
**B60W 50/082; B60W 60/0051;** B60W 2554/406;
B60W 2554/801; B60W 2554/802

(86) Numéro de dépôt international:
**PCT/EP2021/067894**

(87) Numéro de publication internationale:
**WO 2022/008304 (13.01.2022 Gazette 2022/02)**

(54) **PROCÉDÉ DE COMMANDE D'UN VÉHICULE AUTOMOBILE MUNI DE MOYENS DE CONDUITE AUTONOME**

VERFAHREN ZUR STEUERUNG EINES MIT AUTONOMEN ANTRIEBSMITTELN AUSGESTATTETEN KRAFTFAHRZEUGS

METHOD FOR CONTROLLING A MOTOR VEHICLE EQUIPPED WITH AUTONOMOUS DRIVING MEANS

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **10.07.2020 FR 2007348**

(43) Date de publication de la demande:
**17.05.2023 Bulletin 2023/20**

(73) Titulaire: **Ampere SAS**
**92100 Boulogne-Billancourt (FR)**

(72) Inventeurs:
• **DURAND, Bruno**
**75014 PARIS (FR)**
• **PITA-GIL, Guillermo**
**7800 VERSAILLES (FR)**
• **ZAIR, Salim**
**91300 MASSY (FR)**

(56) Documents cités:
**EP-A1- 3 318 946** **FR-A1- 3 041 590**
**US-A1- 2017 228 604**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

*Domaine technique*

L'invention a pour domaine technique la commande d'un véhicule automobile, et plus particulièrement la commande d'un véhicule automobile autonome.

Un véhicule autonome doit pouvoir passer d'un mode passif dans lequel le conducteur dirige le véhicule à un mode actif dans lequel le véhicule autonome se dirige seul, en toute sécurité.

*Etat de la technique antérieure*

De l'état de la technique antérieure, on connaît le document US 1 0 181 084 décrivant une méthode comprenant plusieurs modules de contrôle interconnectés entre eux et capables de combiner les différentes données issues des capteurs embarqués du véhicule grâce à un algorithme de fusion de données, d'estimer les risques de collision, de vérifier la possibilité de circulation en mode autonome et de gérer les manoeuvres appropriées pour le guidage du véhicule tout en concaténant les informations fournies par chaque module.

*Exposé de l'invention*

L'invention a pour objet un procédé de commande d'un véhicule automobile muni de moyens de conduite autonome, de capteurs comprenant au moins un capteur de télémétrie, de moyens de fusion des données déterminées par les capteurs et d'un moyen d'aide à la navigation routière avec gestion du trafic, les moyens de fusion étant configurés pour déterminer une trajectoire estimée du véhicule automobile, la position et la vitesse d'au moins un objet cible détecté par les capteurs autour du véhicule automobile, les marquages d'au moins une voie de circulation ainsi que l'objet cible le plus proche du véhicule automobile, le procédé comprenant les étapes suivantes :

- on détermine une première valeur s'il existe un croisement ou un rapprochement entre la trajectoire estimée du véhicule et la ligne centrale d'au moins une voie de circulation détectée,
- on détermine une deuxième valeur si l'objet cible le plus proche dans la ligne de circulation du véhicule automobile est également détecté par le au moins un capteur de télémétrie,
- on détermine une troisième valeur si une collision va intervenir en comparant la distance entre l'objet cible le plus proche et le véhicule automobile à un seuil prédéterminé,
- on détermine une quatrième valeur si l'espace entre le véhicule automobile et l'objet cible le plus proche est vide en fonction des données du au moins un capteur de télémétrie, et
- on détermine une cinquième valeur si un embouteillage est présent sur la trajectoire du véhicule, puis
- on détermine si les moyens de conduite autonome peuvent être activés en fonction uniquement de la première à la cinquième valeurs.

Pour déterminer s'il existe un croisement ou un rapprochement entre la trajectoire estimée du véhicule et la ligne centrale d'au moins une voie de circulation détectée, on peut réaliser les étapes suivantes :

- on estime l'abscisse curviligne du point de croisement avec chaque ligne détectée qui est la distance à partir du véhicule automobile parcourue sur la trajectoire estimée,
- pour chaque point de la trajectoire estimée, on calcule l'écart en ordonnée entre ce point et le point correspondant de chaque ligne,
- on détermine ensuite parmi les écarts déterminés, si un écart est négatif ou nul,
- si tel est le cas, on détermine qu'un croisement aura lieu compte tenu de la situation estimée, puis

on détermine un booléen en fonction de la présence ou non d'un croisement.

Pour déterminer si l'objet cible le plus proche dans la ligne de circulation du véhicule automobile est également détecté par le au moins un capteur de télémétrie, on peut réaliser les étapes suivantes :

- on détermine un pourcentage de cohérence entre l'objet cible issu de l'étape de fusion et les données du au moins un capteur de télémétrie, puis
- on détermine un booléen en fonction de la comparaison du pourcentage de cohérence à une valeur prédéterminée.

Pour déterminer le pourcentage de cohérence, on peut réaliser les étapes suivantes :

- on remplit une grille d'occupation en fonction des données reçues du au moins un capteur de télémétrie, la grille d'occupation étant un maillage de cellules visité par au moins un capteur de télémétrie et compris dans un espace à deux dimensions, sensiblement parallèle au plan de la route et incluant le véhicule automobile, chaque cellule prenant un état occupé si une cible détectée est présente au moins en partie dans la cellule, chaque cellule prenant un autre état si tel n'est pas le cas, puis
- on identifie les cellules qui correspondent au rectangle orienté de l'objet cible à partir des dimensions et de l'orientation de l'objet cible déterminées lors de l'étape de fusion,
- on détermine ensuite un pourcentage de cohérence en fonction des états des cellules visitées.

Pour s'affranchir de fausses détections de collision lorsque la distance entre l'objet cible et le véhicule automobile est supérieure au seuil prédéfini mais inférieure à un deuxième seuil prédéfini, on peut réaliser les étapes suivantes :

- on applique une méthode de changement de repère en passant du repère global à un repère lié au véhicule automobile,
- on détermine ensuite si au moins une des coordonnées de l'objet cible présente un signe différent des autres coordonnées, puis
- si tel est le cas, on détermine qu'il y a collision.

Pour déterminer si l'espace entre le véhicule automobile et l'objet cible le plus proche est vide, on peut réaliser les étapes suivantes :

- on détermine le nombre de cellules de la grille d'occupation correspondant à un couloir de largeur prédéfinie s'étendant du véhicule automobile à l'objet cible qui sont dans l'état occupé,
- si au moins une cellule est dans l'état occupé, on détermine l'abscisse curviligne jusqu'à la première cellule occupée dans le corridor.

On peut déterminer l'abscisse curviligne jusqu'à la première cellule occupée dans le corridor, uniquement si le nombre de cellules occupées est supérieur à un seuil prédéfini, afin d'éviter les fausses alarmes.

Les première, deuxième, troisième, quatrième et cinquième valeurs peuvent être des valeurs booléennes

Un autre objet de l'invention est un système de commande d'un véhicule automobile muni de moyens de conduite autonome, de capteurs comprenant au moins un capteur de télémétrie, de moyens de fusion des données déterminées par les capteurs et d'un moyen d'aide à la navigation routière avec gestion du trafic, les moyens de fusion étant configurés pour déterminer une trajectoire estimée du véhicule automobile, la position et la vitesse d'au moins un objet cible autour du véhicule automobile, les marquages d'au moins une voie de circulation ainsi que l'objet cible le plus proche. Le système de commande comprend des moyens de traitements et au moins une mémoire, configurés pour réaliser les étapes d'un procédé de commande décrit cidessus.

Le au moins un capteur de télémétrie peut comprendre un système LIDAR.

*Brève description des dessins*

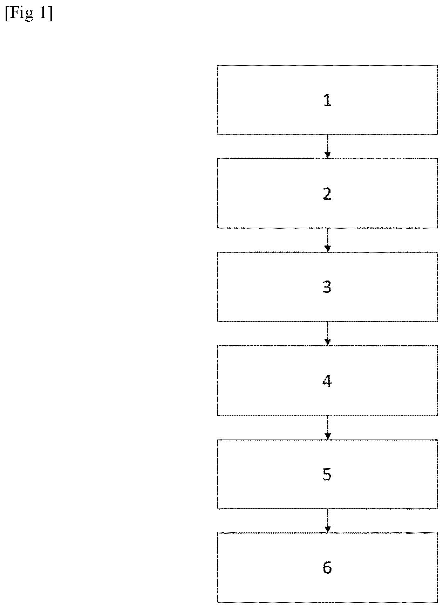

D'autres buts, caractéristiques et avantages de l'invention apparaîtront à la lecture de la description suivante, donnée uniquement à titre d'exemple non limitatif et faite en référence au dessin annexé sur lesquels la [Fig 1] illustre les principales étapes d'un procédé de commande selon l'invention.

*Description détaillée*

Le véhicule automobile comprend de manière classique un châssis supporté par des roues et supportant lui-même différents équipements parmi lesquels un groupe motopropulseur, des moyens de freinage et une unité de direction. Le véhicule automobile est équipé de capteurs permettant de détecter les objets autour de lui, notamment de plusieurs types de capteurs de télémétrie, par exemple de type radar, lidar, sonar ou caméra. Une caméra située à la position frontale du véhicule peut aussi être envisagée.

Le véhicule automobile est aussi équipé de capteurs proprioceptifs comme un odomètre à roue, un gyroscope, un capteur d'angle au volant et un capteur d'angle des roues arrière. Ces capteurs sont utilisés pour estimer la cinématique du véhicule automobile, la vitesse linéaire, son orientation et sa vitesse angulaire en lacet.

Le véhicule est muni d'un calculateur comprenant un processeur, une mémoire vive, une mémoire morte, des convertisseurs analogiques-numériques, et différentes interfaces d'entrée et/ou de sortie. La mémoire morte du calculateur mémorise pour sa part une application informatique, constituée de programmes d'ordinateur comprenant des instructions dont l'exécution par le processeur permet la mise en oeuvre par le calculateur du procédé de commande décrit ci-après. Enfin, grâce à ses interfaces de sortie, le contrôleur est adapté à transmettre des consignes aux différents organes du véhicule.

Le véhicule est équipé d'un système de fusion de données qui permet de combiner les données de détection fournies par l'ensemble des capteurs pour construire une carte de l'ensemble des cibles à proximité du véhicule automobile, et d'estimer précisément leur position et leur vitesse. Par cible, on entend aussi bien un objet, qu'un véhicule. Un tel système de fusion multicapteurs fonctionne généralement de la façon suivante.

Chaque capteur transmet périodiquement au calculateur (à une période qui lui est propre), l'ensemble des cibles détectées, ainsi que leurs attributs cinématiques (ex : position et vitesse) mesurés.

Cette liste de cibles détectées est comparée aux cibles existantes en mémoire dans le calculateur. Par des méthodes d'association de données (ex : méthode des plus proches voisins), on calcule pour chaque cible mesurée s'il correspond à un des cibles enregistrées en mémoire. Si c'est le cas, on combine les attributs cinématiques mesurés et gardés en mémoire à l'aide de techniques de filtrage temporelle, par exemple en utilisant des filtres de Kalman. Un système de score est ensuite utilisé pour pondérer chaque cible enregistrée : si une cible déjà enregistrée en mémoire est de nouveau détecté alors son score augmente, et si une cible enregistrée en mémoire n'est pas détectée alors qu'elle est dans le champ de vision du capteur alors son score diminue. Parmi les cibles enregistrées en mémoire, seules celles qui ont un score suffisamment élevé sont validées.

Si une des cibles mesurées par le capteur ne correspond à aucune cible gardée en mémoire, alors cette cible mesurée doit être ajouté à la liste des cibles mémorisées par le calculateur, et un score zéro est attribué.

Les principales étapes du procédé de commande selon l'invention, illustrées par la figure [Fig. 1], vont maintenant être décrites.

Lors d'une première étape 1, dite de vérification de voie, on identifie un croisement ou un rapprochement entre la trajectoire estimée du véhicule et les lignes détectées par les différents capteurs. Par ligne, on entend la ligne centrale d'une voie de circulation délimitée par un marquage au sol. De même, la trajectoire du véhicule est assimilée à une ligne passant par le centre géométrique du véhicule.

Pour réaliser cela, on estime ensuite l'abscisse curviligne du point de croisement avec chaque ligne détectée qui est la distance à partir du véhicule automobile parcourue sur la trajectoire estimée.

Pour chaque point de la trajectoire estimée, on calcule l'écart en ordonnée entre ce point et le point correspondant de chaque ligne.

On détermine ensuite parmi les écarts déterminés, si un écart est inférieur ou égal à 0.

Si tel est le cas, on détermine qu'un croisement aura lieu compte tenu de la situation estimée. On détermine alors un booléen en fonction de la présence ou non d'un croisement.

Lors d'une deuxième étape 2, dite de confirmation de cible, on détermine si la cible la plus proche dans la ligne de circulation du véhicule automobile, validée par l'étape de fusion est également détectée par le LIDAR. Plus précisément, on détermine un pourcentage de cohérence entre la cible issue de l'étape de fusion et les données du LIDAR puis on détermine un booléen en fonction de la comparaison du pourcentage de cohérence p à une valeur prédéterminée. Dans un autre mode de réalisation, un tel pourcentage de cohérence est déterminé pour d'autres capteurs que le LIDAR.

Pour déterminer ledit pourcentage de cohérence, on remplit une grille d'occupation en fonction des données reçues du LIDAR. La grille d'occupation est un espace à deux dimensions, sensiblement parallèle au plan de la route et comprenant le véhicule automobile. Afin de remplir la grille d'occupation, un maillage de cellules est déterminé. La taille des cellules dépend de la capacité et de la vitesse de traitement des moyens de traitement de données.

Chaque cellule peut prendre un état parmi occupé, inconnu et non visité.

Une cellule est dans un état occupé si une cible détectée est présente au moins en partie dans la cellule

Une cellule est dans un état inconnu si elle a été visitée par le lidar mais qu'elle n'est pas occupée.

Une cellule est dans un état non visité si elle n'a pas été visité par le LIDAR. Il s'agit par exemple des cellules présentes dans l'ombre d'une cible plus proche du véhicule automobile.

Une fois la grille d'occupation déterminée, on identifie les cellules qui correspondent au rectangle orienté de la cible à partir des dimensions et de l'orientation de la cible déterminées lors de l'étape de fusion.

On détermine ensuite un pourcentage de cohérence p en fonction des états des cellules identifiées par application de l'équation suivante.

$$p = 100 * \frac{n_{occ} + n_{inc}}{n_{tot} - n_{nv}}$$

Avec :

$n_{occ}$ : nombre de cellules occupées
$n_{inc}$ : nombre de cellules inconnues
$n_{tot}$ : nombre de cellules totales
$n_{nv}$ : nombre de cellules non visitées

Lors d'une troisième étape 3, dite de vérification de collision, on détermine, à chaque instant de la trajectoire estimée et pour chaque cible identifiée, la distance entre le centre de la cible et celui du véhicule automobile.

On compare ensuite cette distance à un seuil minimal de distance en dessous duquel on considère qu'une collision intervient.

Pour s'affranchir de fausses alarmes lorsque la cible est proche du véhicule automobile (c'est-à-dire que la différence entre la distance et le seuil minimal est positive mais inférieure à un deuxième seuil, faible à l'échelle de la taille du véhicule), on applique une méthode de changement de repère permettant de passer du repère global de l'environnement à un repère local lié au véhicule automobile. On détermine ensuite si au moins une des coordonnées de la cible présente un signe différent des autres coordonnées. Si tel est le cas, on détermine qu'il y a collision.

Si plusieurs collisions sont identifiées, on ne conserve que la collision associée à la durée avant impact la plus courte.

Enfin, on détermine un booléen selon que l'on considère ou non qu'une collision va intervenir.

Lors d'une quatrième étape 4, on détermine si l'espace entre le véhicule automobile et la cible n'est pas occupé dans la grille d'occupation déterminée en fonction des données du LIDAR. Plus précisément, on détermine le nombre de cellules de la grille d'occupation correspondant à un couloir de largeur prédéfinie s'étendant du véhicule automobile à la cible qui sont dans l'état occupé.

Si au moins une cellule est dans l'état occupé, on détermine l'abscisse curviligne jusqu'à la première cellule occupée dans le corridor.

Dans un mode de réalisation particulier, on détermine l'abscisse curviligne jusqu'à la première cellule occupée dans le corridor, uniquement si le nombre de cellules occupées est supérieur à un seuil prédéfini, afin d'éviter les fausses alarmes.

Au cours d'une cinquième étape 5, on détermine si un embouteillage est présent sur la trajectoire du véhicule, notamment en fonction des données d'une aide à la navigation routière. On détermine alors un booléen en fonction de la présence ou non d'un embouteillage.

Au cours d'une sixième étape 6, on détermine si le mode de conduite autonome peut être activé en fonction des données déterminées à l'issue de chacune des étapes 1 à 5. Dans un mode de réalisation particulier, la sixième étape 6 est une combinaison des booléens déterminés à chaque étape 1 à 5.

Le procédé de commande a été décrit pour un véhicule automobile muni d'un capteur de télémétrie de type système LIDAR. Néanmoins, d'autres capteurs de télémétrie peuvent être employés en combinaison ou à la place du système LIDAR, tel qu'un système de mesure du temps de vol, un radar ou un système de détection optique.

**Revendications**

1. Procédé de commande d'un véhicule automobile muni de moyens de conduite autonome, de capteurs comprenant au moins un capteur de télémétrie, de moyens de fusion des données déterminées par les capteurs et d'un moyen d'aide à la navigation routière avec gestion du trafic, les moyens de fusion étant configurés pour déterminer une trajectoire estimée du véhicule automobile, la position et la vitesse d'au moins un objet cible détecté par les capteurs autour du véhicule automobile, les marquages d'au moins une voie de circulation ainsi que l'objet cible le plus proche du véhicule automobile, le procédé comprenant les étapes suivantes :

   - on détermine une première valeur s'il existe un croisement ou un rapprochement entre la trajectoire estimée du véhicule et la ligne centrale d'au moins une voie de circulation détectée,
   - on détermine une deuxième valeur si l'objet cible le plus proche dans la ligne de circulation du véhicule automobile est également détecté par le au moins un capteur de télémétrie,
   - on détermine une troisième valeur si une collision va intervenir en comparant la distance entre l'objet cible le plus proche et le véhicule automobile à un seuil prédéterminé,
   - on détermine une quatrième valeur si l'espace entre le véhicule automobile et l'objet cible le plus proche est vide en fonction des données du au moins un capteur de télémétrie, et
   - on détermine une cinquième valeur si un embouteillage est présent sur la trajectoire du véhicule, puis
   - on détermine si les moyens de conduite autonome peuvent être activés en fonction uniquement de la première à la cinquième valeurs.

2. Procédé de commande selon la revendication 1, dans lequel, pour déterminer s'il existe un croisement ou un rapprochement entre la trajectoire estimée du véhicule et la ligne centrale d'au moins une voie de circulation détectée, on réalise les étapes suivantes :

   - on estime l'abscisse curviligne du point de croisement avec chaque ligne détectée qui est la distance à partir du véhicule automobile parcourue sur la trajectoire estimée,
   - pour chaque point de la trajectoire estimée, on calcule l'écart en ordonnée entre ce point et le point correspondant de chaque ligne,
   - on détermine ensuite parmi les écarts déterminés, si un écart est négatif ou nul,
   - si tel est le cas, on détermine qu'un croisement aura lieu compte tenu de la situation estimée, puis
   - on détermine un booléen en fonction de la présence ou non d'un croisement.

3. Procédé de commande selon l'une quelconque des revendications précédentes, dans lequel, pour déterminer si l'objet cible le plus proche dans la ligne de circulation du véhicule automobile est également détecté par le au moins un capteur de télémétrie, on réalise les étapes suivantes :

   - on détermine un pourcentage de cohérence entre l'objet cible issu de l'étape de fusion et les données du au moins un capteur de télémétrie, puis
   - on détermine un booléen en fonction de la comparaison du pourcentage de cohérence à une valeur prédéterminée.

4. Procédé de commande selon la revendication 3, dans lequel, pour déterminer le pourcentage de cohérence, on réalise les étapes suivantes :

   - on remplit une grille d'occupation en fonction des données reçues du au moins un capteur de télémétrie, la grille d'occupation étant un maillage de cellules visité par au moins un capteur de télémétrie et compris dans un espace à deux dimensions, sensiblement parallèle au plan de la route et incluant le véhicule automobile, chaque cellule prenant un état occupé si une cible détectée est présente au moins en partie dans la cellule, chaque cellule prenant un autre état si tel n'est pas le cas, puis
   - on identifie les cellules qui correspondent au rectangle orienté de l'objet cible à partir des dimensions et de l'orientation de l'objet cible déterminées lors de l'étape de fusion, et
   - on détermine ensuite un pourcentage de cohérence en fonction des états des cellules visi-

tées.

5. Procédé de commande selon l'une quelconque des revendications précédentes, dans lequel, pour s'affranchir de fausses détections de collision lorsque la distance entre l'objet cible et le véhicule automobile est supérieure au seuil prédéfini mais inférieure à un deuxième seuil prédéfini, on réalise les étapes suivantes :

- on applique une méthode de changement de repère en passant du repère global à un repère lié au véhicule automobile,
- on détermine ensuite si au moins une des coordonnées de l'objet cible présente un signe différent des autres coordonnées, puis
- si tel est le cas, on détermine qu'il y a collision.

6. Procédé de commande selon la revendication 4, dans lequel, pour déterminer si l'espace entre le véhicule automobile et l'objet cible le plus proche est vide, on réalise les étapes suivantes :

- on détermine le nombre de cellules de la grille d'occupation correspondant à un couloir de largeur prédéfinie s'étendant du véhicule automobile à l'objet cible qui sont dans l'état occupé,
- si au moins une cellule est dans l'état occupé, on détermine l'abscisse curviligne jusqu'à la première cellule occupée dans le corridor.

7. Procédé de commande selon la revendication 6, dans lequel on détermine l'abscisse curviligne jusqu'à la première cellule occupée dans le corridor, uniquement si le nombre de cellules occupées est supérieur à un seuil prédéfini, afin d'éviter les fausses alarmes.

8. Procédé de commande selon l'une quelconque des revendications précédentes, dans lequel les première, deuxième, troisième, quatrième et cinquième valeurs sont des valeurs booléennes.

9. Système de commande d'un véhicule automobile muni de moyens de conduite autonome, de capteurs comprenant au moins un capteur de télémétrie, de moyens de fusion des données déterminées par les capteurs et d'un moyen d'aide à la navigation routière avec gestion du trafic, les moyens de fusion étant configurés pour déterminer une trajectoire estimée du véhicule automobile, la position et la vitesse d'au moins un objet cible autour du véhicule automobile, les marquages d'au moins une voie de circulation ainsi que l'objet cible le plus proche, **caractérisé par le fait qu'**il comprend des moyens de traitements et au moins une mémoire, configurés pour réaliser les étapes d'un procédé de commande selon l'une quelconque des revendications 1 à 8.

10. Système de commande selon la revendication 9, dans lequel le au moins un capteur de télémétrie comprend un système LIDAR.

## Patentansprüche

1. Verfahren zur Steuerung eines mit Einrichtungen zum autonomen Fahren, mit mindestens einen Telemetriesensor enthaltenden Sensoren, mit Einrichtungen zur Fusion der von den Sensoren bestimmten Daten und mit einer Einrichtung zur Straßennavigationshilfe mit Verkehrsmanagement versehenen Kraftfahrzeugs, wobei die Fusionseinrichtungen konfiguriert sind, einen geschätzten Fahrweg des Kraftfahrzeugs, die Position und die Geschwindigkeit mindestens eines von den Sensoren um das Kraftfahrzeug herum erkannten Zielobjekts, die Markierungen mindestens eines Fahrstreifens sowie das dem Kraftfahrzeug am nächsten befindliche Zielobjekt zu bestimmen, wobei das Verfahren die folgenden Schritte enthält:

- es wird ein erster Wert bestimmt, ob es eine Kreuzung oder eine Annäherung zwischen dem geschätzten Fahrweg des Fahrzeugs und der Mittellinie mindestens eines erkannten Fahrstreifens gibt,
- es wird ein zweiter Wert bestimmt, ob das in der Fahrlinie des Kraftfahrzeugs am nächsten befindliche Zielobjekt ebenfalls von dem mindestens einen Telemetriesensor erkannt wird,
- es wird ein dritter Wert bestimmt, ob eine Kollision eintreten wird, indem der Abstand zwischen dem am nächsten befindlichen Zielobjekt und dem Kraftfahrzeug mit einer vorbestimmten Schwelle verglichen wird,
- abhängig von den Daten des mindestens einen Telemetriesensors wird ein vierter Wert bestimmt, ob der Raum zwischen dem Kraftfahrzeug und dem am nächsten befindlichen Zielobjekt leer ist, und
- es wird ein fünfter Wert bestimmt, ob es einen Stau auf dem Fahrweg des Fahrzeugs gibt, dann
- wird abhängig nur vom ersten bis zum fünften Wert bestimmt, ob die Einrichtungen zum autonomen Fahren aktiviert werden können.

2. Steuerverfahren nach Anspruch 1, wobei, um zu bestimmen, ob es eine Kreuzung oder eine Annäherung zwischen dem geschätzten Fahrweg des Fahrzeugs und der Mittellinie mindestens eines erkannten Fahrstreifens gibt, die folgenden Schritte durchgeführt werden:

- die gekrümmte Abszisse des Kreuzungspunkts mit jeder erkannten Linie wird geschätzt,

die die Strecke ausgehend von dem Kraftfahrzeug ist, die auf dem geschätzten Fahrweg gefahren wurde,

- für jeden Punkt des geschätzten Fahrwegs wird die Ordinatenabweichung zwischen diesem Punkt und dem entsprechenden Punkt jeder Linie berechnet,

- anschließend wird unter den bestimmten Abweichungen bestimmt, ob eine Abweichung negativ oder null ist,

- wenn dies der Fall ist, wird bestimmt, das unter Berücksichtigung der geschätzten Situation eine Kreuzung stattfinden wird, dann

- wird abhängig vom Vorhandensein oder nicht einer Kreuzung ein Boolean bestimmt.

3. Steuerverfahren nach einem der vorhergehenden Ansprüche, wobei, um zu bestimmen, ob das in der Fahrlinie des Kraftfahrzeugs am nächsten befindliche Zielobjekt ebenfalls von dem mindestens einen Telemetriesensor erkannt wird, die folgenden Schritte durchgeführt werden:

- es wird ein Kohärenzprozentsatz zwischen dem vom Fusionsschritt stammenden Zielobjekt und den Daten des mindestens einen Telemetriesensors bestimmt, dann

- wird abhängig vom Vergleich des Kohärenzprozentsatzes mit einem vorbestimmten Wert ein Boolean bestimmt.

4. Steuerverfahren nach Anspruch 3, wobei, um den Kohärenzprozentsatz zu bestimmen, die folgenden Schritte durchgeführt werden:

- ein Besetzungsgitter wird abhängig von den vom mindestens einen Telemetriesensor empfangenen Daten gefüllt, wobei das Besetzungsgitter eine Vermaschung von Zellen ist, die von mindestens einem Telemetriesensor besucht wird und in einem zweidimensionalen Raum im Wesentlichen parallel zur Ebene der Straße und das Kraftfahrzeug einschließend enthalten ist, wobei jede Zelle einen Besetztzustand annimmt, wenn mindestens ein erkanntes Ziel zumindest zum Teil in der Zelle vorhanden ist, wobei jede Zelle einen anderen Zustand annimmt, wenn dies nicht der Fall ist, dann

- werden ausgehend von den Abmessungen und der Ausrichtung des Zielobjekts, die im Fusionsschritt bestimmt werden, die Zellen identifiziert, die dem ausgerichteten Rechteck des Zielobjekts entsprechen, und

- anschließend wird ein Kohärenzprozentsatz abhängig von den Zuständen der besuchten Zellen bestimmt.

5. Steuerverfahren nach einem der vorhergehenden Ansprüche, wobei, um sich von falschen Kollisionserkennungen zu befreien, wenn die Entfernung zwischen dem Zielobjekt und dem Kraftfahrzeug größer ist als die vordefinierte Schwelle, aber kleiner als eine zweite vordefinierte Schwelle, die folgenden Schritte durchgeführt werden:

- es wird eine Methode der Koordinatensystemänderung angewendet, indem vom globalen Koordinatensystem zu einem mit dem Kraftfahrzeug verbundenen Koordinatensystem übergegangen wird,

- anschließend wird bestimmt, ob mindestens eine der Koordinaten des Zielobjekts ein anderes Vorzeichen als die anderen Koordinaten aufweist, dann

- wenn dies der Fall ist, wird bestimmt, dass eine Kollision vorliegt.

6. Steuerverfahren nach Anspruch 4, wobei, um zu bestimmen, ob der Raum zwischen dem Kraftfahrzeug und dem am nächsten befindlichen Zielobjekt leer ist, die folgenden Schritte durchgeführt werden:

- es wird die Anzahl von Zellen des Besetzungsgitters, das einem sich vom Kraftfahrzeug zum Zielobjekt erstreckenden Korridor vordefinierter Breite entspricht, bestimmt, die im Besetztzustand sind,

- wenn mindestens eine Zelle im Besetztzustand ist, wird die gekrümmte Abszisse bis zur ersten besetzten Zelle im Korridor bestimmt.

7. Steuerverfahren nach Anspruch 6, wobei die gekrümmte Abszisse bis zur ersten besetzten Zelle im Korridor nur bestimmt wird, wenn die Anzahl von besetzten Zellen höher ist als eine vordefinierte Schwelle, um Fehlalarme zu vermeiden.

8. Steuerverfahren nach einem der vorhergehenden Ansprüche, wobei die ersten, zweiten, dritten, vierten und fünften Werte boolesche Daten sind.

9. Steuersystem eines mit Einrichtungen zum autonomen Fahren, mit mindestens einen Telemetriesensor enthaltenden Sensoren, mit Fusionseinrichtungen der von den Sensoren bestimmten Daten und mit einer Einrichtung zur Straßennavigationshilfe mit Verkehrsmanagement versehenen Kraftfahrzeugs, wobei die Fusionseinrichtungen konfiguriert sind, einen geschätzten Fahrweg des Kraftfahrzeugs, die Position und die Geschwindigkeit mindestens eines Zielobjekts um das Kraftfahrzeug herum, die Markierungen mindestens eines Fahrstreifens sowie das am nächsten befindliche Zielobjekt zu bestimmen, **dadurch gekennzeichnet, dass** es Verarbeitungseinrichtungen und mindestens einen Speicher enthält, die konfiguriert sind, die Schritte eines Steuerverfahrens nach einem der Ansprüche 1 bis 8 durchzuführen.

10. Steuersystem nach Anspruch 9, wobei der mindestens eine Telemetriesensor ein LIDAR-System enthält.

## Claims

1. Method for controlling a motor vehicle provided with autonomous driving means, sensors comprising at least one telemetry sensor, means for merging data determined by the sensors and a road navigation assistance means with traffic management, the merging means being configured to determine an estimated trajectory of the motor vehicle, the position and the speed of at least one target object detected by the sensors around the motor vehicle, the markings of at least one traffic lane and the target object closest to the motor vehicle, the method comprising the following steps:- a first value is determined if there is an intersection or a convergence between the estimated trajectory of the vehicle and the center line of at least one detected traffic lane,- a second value is determined if the closest target object in the line of travel of the motor vehicle is also detected by the at least one telemetry sensor,- a third value is determined if a collision will occur by comparing the distance between the closest target object and the motor vehicle with a predetermined threshold,- a fourth value is determined if the space between the motor vehicle and the closest target object is empty as a function of the data from the at least one telemetry sensor, and- a fifth value is determined if there is congestion on the trajectory of the vehicle, then - a determination is made as to whether the autonomous driving means can be activated as a function only of the first to fifth values.

2. Control method according to Claim 1, wherein, to determine if there an intersection or a convergence between the estimated trajectory of the vehicle and the center line of at least one detected traffic lane, the following steps are performed:- the curvilinear abscissa of the point of intersection with each detected line, which is the distance from the motor vehicle traveled on the estimated trajectory, is estimated,- for each point of the estimated trajectory, the ordinate deviation between this point and the corresponding point of each line is calculated,- out of the determined deviations, a determination is then made as to whether a deviation is negative or zero, - if such is the case, it is determined that an intersection will occur given the estimated situation, then - a Boolean is determined as a function of the presence or not of an intersection.

3. Control method according to any one of the preceding claims, wherein, to determine whether the target object closest in the line of travel of the motor vehicle is also detected by the at least one telemetry sensor, the following steps are performed:- a percentage coherence is determined between the target object derived from the merging step and the data from the at least one telemetry sensor, then- a Boolean is determined as a function of the comparison of the percentage coherence with a predetermined value.

4. Control method according to Claim 3, wherein, to determine the percentage coherence, the following steps are performed: - an occupancy grid is filled as a function of the data received from the at least one telemetry sensor, the occupancy grid being a meshing of cells visited by at least one telemetry sensor and contained within a two-dimensional space, substantially parallel to the plane of the road and including the motor vehicle, each cell taking an occupied state if a detected target is present at least partly in the cell, each cell taking another state if such is not the case, then - the cells which correspond to the oriented rectangle of the target object are identified from the dimensions and the orientation of the target object determined in the merging step, and- a percentage coherence is then determined as a function of the states of the visited cells.

5. Control method according to any one of the preceding claims, wherein, to eliminate false collision detections when the distance between the target object and the motor vehicle is above the predefined threshold but below a second predefined threshold, the following steps are performed:- a change-of-reference-frame method is applied by switching from the overall reference frame to a reference frame linked to the motor vehicle, - a determination is then made as to whether at least one of the coordinates of the target object has a sign different from the other coordinates, then - if such is the case, collision is determined.

6. Control method according to Claim 4, wherein, to determine if the space between the motor vehicle and the closest target object is empty, the following steps are performed:- the number of cells of the occupancy grid corresponding to a corridor of predefined width extending from the motor vehicle to the target object which are in the occupied state is determined,- if at least one cell is in the occupied state, the curvilinear abscissa to the first occupied cell in the corridor is determined.

7. Control method according to Claim 6, wherein the curvilinear abscissa to the first occupied cell in the corridor is determined only if the number of occupied cells is above a predefined threshold, in order to avoid false alarms.

8. Control method according to any one of the preceding claims, wherein the first, second, third, fourth and fifth values are Boolean values.

9. System for controlling a motor vehicle provided with autonomous driving means, sensors comprising at least one telemetry sensor, means for merging data determined by the sensors and a road navigation assistance means with traffic management, the merging means being configured to determine an estimated trajectory of the motor vehicle, the position and the speed of at least one target object around the motor vehicle, the markings of at least one traffic lane and the closest target object, **characterized by** the fact that it comprises processing means and at least one memory, configured to perform the steps of a control method according to any one of Claims 1 to 8.

10. Control system according to Claim 9, wherein the at least one telemetry sensor comprises a LIDAR system.

[Fig 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10181084 B